# NEW EUROPEAN PATENT SPECIFICATION

(11) **EP 0 679 841 B2**
(45) Date of publication and mention of the opposition decision: **21.05.2003**
(45) Mention of the grant of the patent: 15.10.1997
(21) Application number: 95201065.0
(22) Date of filing: 25.04.1995
(51) Int. Cl.: F23L 17/14, F23L 17/04, F24H 8/00

(54) **Assembly of air supply pipe and/or flue gas discharge pipe for connection to a furnace**
Anordnung eines Luftzufuhrrohres und/oder eines Rauchgas-Abfuhrrohres für die Verbindung zu einem Ofen
Ensemble d'un tube d'alimentation en air et/ou d'un tube d'évacuation en gaz de fumée pour connexion à un four

(30) Priority: 25.04.1994 NL 9400659
(43) Date of publication of application: 02.11.1995
(73) Proprietor: MUELINK & GROL B.V., NL-9700 AM Groningen (NL)
(72) Inventor: Beekman, Anton, NL-9728 WD Groningen (NL); Pestoor, Ietse, NL-9891 AA Ezinge (NL); Cantineaux, André, NL-7002 HX Doetinchem (NL)
(74) Representative: van Westenbrugge, André

(56) References cited:
- DE-A- 3 929 578
- DE-A- 4 123 614
- NL-A- 8 601 344
- NL-A- 8 701 809
- NL-A- 8 801 181
- NL-A- 9 002 786
- NL-C- 180 781
- US-A- 4 280 656

## Description

The invention relates to a flue gas discharge assembly according to the preamble of claim 1, suitable for combustion furnaces, for example for a hot water system or for a heating system for domestic use. The invention is concerned in particular with condensation and the problems connected therewith, particularly as the result of ice formation, for example at low outside temperatures. The invention can be applied both to individual supply or discharge pipes and to an assembly of supply and discharge pipe, for example of the type with supply and discharge pipes surrounding each other concentrically, in an essentially closed furnace, for example of the type described in EP-A-0,109,620, in particular Fig. 2.

NL-A-75.096 49 concerns a flue gas discharge of the horizontal type to discharge flue gases through the wall of a zoom.

A flue gas discharge assembly according to the preamble of claim 1 is disclosed in NL-86.01344. This NL-86.01344 reveals a flue gas pipe with collecting means positioned in the interior of said pipe. These collecting means consist on the one hand of a plate and on the other hand of an annular gap to which a drain to the outside of the pipe is connected.

The object of the invention is providing a flue gas discharge assembly of the vertical type, which prevents condensation or other liquid from being able to collect in areas which can become exposed to low temperatures, as a result of which ice can form. For this purpose, the aim of the invention is to collect condensation and other liquid in relatively warm areas and to transfer them to other relatively warm areas, where the chance of ice forming is minimal.

According to the invention this is achieved by a flue gas discharge assembly according to claim 1. There is provided a fluid communication in order to ensure that condensation forming outside the pipes is collected and fed back to the interior of said pipes, in particular to the interior of the pipe which is being used for discharging the relatively warm flue gases.

For returning the condensation and other liquid to the interior of the pipe, it is advantageous to use a gap whose walls are sufficiently long to prevent air flow inside said gap from the interior of the pipe to the outside. Condensation and other liquid is still able to pass through said gap, under the influence of, for example, gravity.

The invention will become clearer from the description below of a preferred embodiment of the present invention, with reference to the appended drawings, in which:
Fig. 1 shows diagrammatically a general view of a combustion boiler of the closed type, provided with an assembly of air supply pipe and/or flue gas discharge pipe according to the present invention;
Fig. 2 shows a view according to Fig. 1, partially in section, of the top part of the assembly shown;
Fig. 3 shows a view in section along line III-III in Fig. 2.

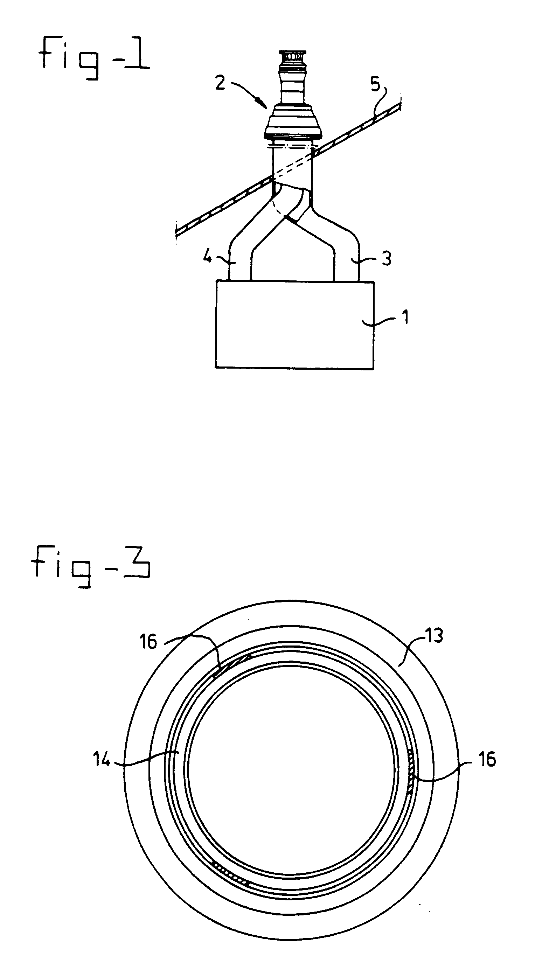

Fig. 1 shows a furnace 1, for example for a water heater (not shown). An assembly 2 is connected to said boiler 1, which assembly has an air supply pipe 3 and a flue gas discharge pipe 4, running vertically. Along a certain part of the height the air supply pipe 3 runs in such a way that it surrounds the flue gas discharge pipe 4 concentrically. In that part of the assembly 2 where the pipes surround each other concentrically, said assembly projects through the roof 5, so that the two pipes 3, 4 open out into the atmosphere.

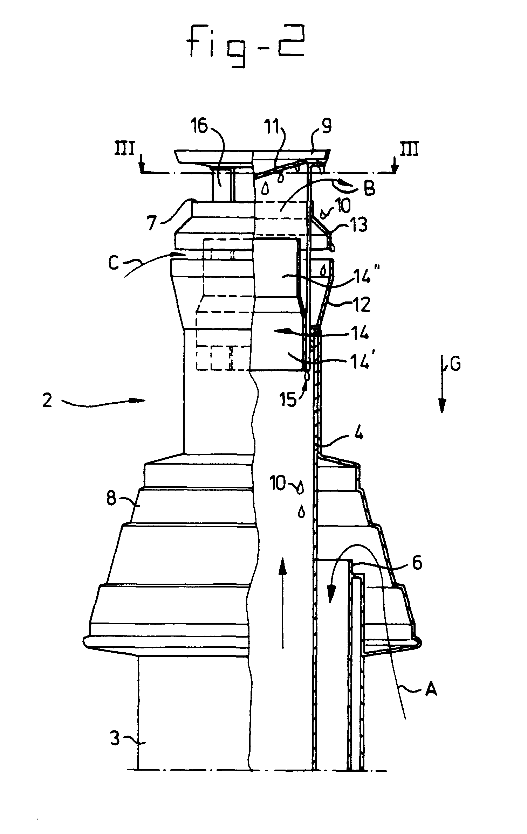

Figs. 2 and 3 show the opening construction of the pipes 3, 4 in greater detail. As can be seen from these figures, the opening 6 of the air supply pipe 3 is situated at a substantial distance below the opening 7 of the flue gas discharge pipe 4. A cover cap 8 is placed concentrically around the flue gas discharge pipe 4 and, as shown, covers the opening of the air supply pipe 3. As shown by the arrows A, fresh air flows through the gap between the cover cap 8 and the air supply pipe 3 into the opening 6. Said fresh air is drawn in by, for example, a fan (not shown) disposed in the furnace 1.

A cover plate 9, which in top view covers the surface of the opening 7 and fits loosely around it, is provided at an axial distance above the opening 7. Said cover plate 9 prevents, for example, rain entering. Flue gases leave the furnace 1 in the direction of the arrows B and pass through the gap between the opening 7 and the cover plate 9 into the atmosphere. In this case the relatively warm flue gases meet the relatively cool cover plate 9. Moisture in the flue gases will consequently condense against the cover plate 9, which leads to droplets forming. These liquid droplets 10 may possibly freeze, which can lead to icicles forming. Such ice formation can lead to poorer functioning of the system, for example through narrowing of the various air gaps. In addition, a risk from falling ice can occur when the ice is melting. The object of the present invention is therefore that the condensation forming should be collected at points where there is least risk of ice forming, or that the condensation should be discharged into, for example, the sewerage system.

In the first place, for this purpose the cover plate 9 is constructed in a special way at the surface facing the opening 7. The cover plate 9 is constructed at that side with a surface 11 which slopes from the peripheral edge of the cover plate 9 in the direction of the centre thereof towards the opening 7. Under the influence of gravity (arrow G), liquid droplets 10 forming on said surface 11 will move towards the centre of the cover plate 9, and will accumulate to form larger liquid droplets which can be collected in the flue gas discharge pipe 4 situated axially below them. Inside said flue gas discharge pipe 4 they can be collected, for example, in the bottom of said pipe 4, and transferred from there to, for example, the sewerage system. For example, in the case of conventional high-efficiency water heaters for central heating systems a collecting unit connected to the sewerage system is fitted in the bottom of the flue gas discharge system, for the purpose of discharging condensation which forms in the top part of the flue gas discharge pipe, i.e. before the opening 7 is reached, and precipitates on the inside walls of the flue gas discharge pipe. Such a known system which is connected to the sewerage system can advantageously be used in the case of the present invention.

Secondly, the assembly is also provided with a collecting bowl 12, which is fitted concentrically around the flue gas pipe 4, with axial space between them, and a ring 13 is fitted, also coaxially with the flue gas discharge pipe 4. The maximum external diameter of the ring 13 is made smaller in this case than the maximum internal diameter of the vessel 12. As illustrated, liquid droplets 10 which fall down outside the opening 7 from the cover plate 9 are collected on the ring 13. Flowing along the outside wall of the ring 13, the liquid droplets 10 ultimately reach the inside of the collecting bowl 12. If the capacity of the collecting bowl 12 is great enough, the liquid droplets 10 could remain collected therein, and evaporate uniformly, for example in warmer weather. The volume of the collecting bowl 12 should then be such that the collecting bowl 12 overflows possibly only in the most extreme circumstances (for example, a lengthy period of frost).

However, according to a further aspect of the invention, the interior space of the collecting bowl 12 is in fluid communication with the flue gas discharge pipe 4. As shown in Fig. 2, the wall of the collecting bowl 12 forms part of the flue gas discharge pipe 4. The same applies to the ring 13, the top edge of which defines the opening 7.

A pipe branch 14 is disposed inside the flue gas discharge pipe 4. Said pipe branch 14 runs from some distance axially below the bottom edge of the bowl 12 past the top edge of the collecting bowl 12, so that it bridges the axial gap between the collecting bowl 12 and the ring 13, and projects for some distance into the ring 13. The branch 14 has a relatively broad branch part 14' and a narrower branch part 14', with a conical transition part between them. The outside wall of the broader branch part 14" defines a relatively narrow gap with the inside wall of the flue gas discharge pipe 4. Said gap 15 extends over a considerable distance in the axial direction and is widened in a stepwise manner in the direction of the furnace 1 (Fig. 1). By way of this gap 15 the annular space bounded between the collecting bowl 12 and the narrower branch part 14" is in fluid communication with the interior of the flue gas discharge pipe 4 below the branch 14. Droplets 10 can flow through this gap 15 out of the collecting bowl 12 and further down into the flue gas discharge pipe 4, and are then discharged to, for example, the sewer, as already explained above. However, the air resistance in the gap 15 is considerably greater than the air resistance in the branch 14. Combustion gases will therefore not escape through the gap 15 to the environment. In order to reinforce this effect, the branch 14 is narrowed above the gap 15, which produces an acceleration of the flue gases in the area 13. Consequently, it is also ensured that flue gases escaping through the axial gap between the collecting bowl 12 and the ring 13 are more likely to follow the route indicated by arrows B. Outside air is more likely to caused to be drawn in through the axial gap between collecting bowl 12 and the ring 13 in the direction of the arrows (C). The drawing in of said outside air means that a reliable collection of liquid droplets 10 in the collecting bowl 12 is promoted further, since the liquid droplets 10 undergo a radially inward directed force as soon as they come away from the ring 13.

The gap 15 runs all the way around. It is interrupted only at the position of the supporting strips 16, which run from the bottom side of the collecting bowl 12 to the cover plate 9. The branch 14 is connected by way of the supporting strips 16 to the flue gas discharge pipe 4, with a fixing flange of the cap 8 between them. The ring 13 and the cover plate 9 are also suspended from the supporting strips 16. The collecting bowl 12 is pushed tightly over the supporting strips 16, and is connected thereto by friction. Of course, the collecting bowl 12 can also be connected by mechanical fixing means or by welding to the supporting strips 16 or any other suitable supporting element, such as the flange of the cap 8 or the flue gas discharge pipe 4.

It will be clear that variants of embodiments other than those shown here also lie with the scope of the present invention. For example, the collecting bowl 12 can be provided in the bottom thereof with an annular pattern of holes, by means of which the fluid communication with the interior of the flue gas discharge pipe 4 is ensured. Said pattern of holes can then be arranged in such a way that flue gases do not escape from the flue gas discharge pipe 4 through said pattern of holes into the environment. For example, in such a situation the gap 15 can be wider. In that case also, it is possible, for example, to shorten the distance over which the gap 15 extends, by shortening the branch 14. The underside of the branch 14 can, for example, be connected directly to the bottom of the collecting bowl 12, and does not then project further downwards. In addition, the narrowing in the branch 14 is not absolutely necessary. An acceleration of the gas flow through the branch 14 could also be achieved in another way. Moreover, the collecting bowl 12 can also be shaped differently, for example with convex walls instead of the flat walls shown here. It could also have completely vertical side walls. The ring 13 may be omitted if desired, or it could be shaped differently if desired, for example with convex side walls. The inverted funnel shape thereof shown here is not absolutely essential. The axial gap between the collecting bowl 12 and the ring 13 may also be omitted, in which case, for example, the ring 13 projects into the collecting bowl 12. What is important is that the liquid droplets 10 falling vertically downwards from each surface higher up can be collected in the collecting bowl 12. It is a further advantage in this case for liquid which has been collected in the collecting bowl 12 to be fed back into a pipe 3, 4 connected to the furnace 1. A variant which is the reverse of what is shown is also possible, in the case of which the flue gas discharge pipe 4 is fitted concentrically around the air supply pipe 3, and the air supply pipe 3 projects past the flue gas discharge pipe 4 and opens out into the atmosphere.

## Claims

1. A flue gas discharge assembly (2) suitable for connection to the flue discharge opening of a combustion furnace of, for example a heating boiler or water heater, the assembly comprising a flue gas discharge pipe (4, 14) provided with collecting means (12) for collecting condensation, in which a covering element (9) covering the cross section of the flue gas pipe (4, 14) is arranged at an axial distance from the opening of said pipe which faces away from the furnace so that fluid flow between said covering element (9) and the outlet opening of the discharge pipe is permitted, **characterized in that** the collecting means comprise a collecting bowl element (12), the periphery of the bowl being adapted to the covering element (9) and coaxial therewith, in which the collecting bowl element is arranged outside the flue gas discharge pipe (4, 14) and connected to said pipe, such that condensation formed outside the discharge assembly above said bowl (12) is collected in said bowl (12) the collecting means (12) being in fluid communication with the interior of the flue gas discharge pipe (4) such that fluid collected in the collecting bowl element (12) can flow into the flue gas discharge pipe.

2. Flue gas discharge assembly (2) according to claim 1, **characterized in that**, said collecting bowl element (12) extends around said discharge pipe (4,14) and preferably is coaxially therewith.

3. Flue gas discharge assembly (2) according to one or more of the preceding claims, **characterized in that**, an annular element (13) is disposed above the collecting bowl element (12), which annular element (13) defines a drip edge which lies inside the upwardly facing edge of the collecting bowl element (12).

4. Flue gas discharge assembly according to claim 3, **characterized in that**, the annular element (13) has walls sloping relative to the lengthwise direction of the flue gas discharge pipe (4,14).

5. Flue gas discharge assembly according to claim 3 or 5, **characterized in that**, the annular element (13) projects into the collecting bowl element (12).

6. Flue gas discharge assembly according to one or more of the claims 3-4, **characterized in that**, an axial space is maintained between the collecting bowl element (12) and annular element (13).

7. Flue gas discharge assembly (2) according to one or more of the claims 3-6, **characterized in that**, the covering element (9) is arranged above the annular element (13).

8. Flue gas discharge assembly according to one of the preceding claims, **characterized in that**, the covering element (9) has a wall part (11) which slopes from the periphery towards the centre line of the pipes (4,13,14) in the direction of the opening of said pipe (4).

9. Flue gas discharge assembly according to one or more of the preceding claims, **characterized in that**, the collecting bowl element (12) is in fluid communication with the interior of the pipe by way of an annular gap, while the walls of said annular gap are designed in such a way that a considerable air resistance to gas flow through said gap is set up by comparison with the air resistance inside the pipe (4).

10. Flue gas discharge assembly according to one or more of the preceding claims **characterized in that**, the collecting bowl element (12) surrounds a pipe branch (14) projecting from said discharge pipe (4), and that the collecting vessel element (12) defines the continuation of the opening of said pipe (4).

11. Flue gas discharge assembly according to claim 10 in combination with at least claim 3, **characterized in that**, said pipe branch (14) opens out inside said annular element (13).

12. Flue gas discharge assembly (2) according to one or more of the preceding claims, **characterized in that**, elements are disposed in the area inside the collecting bowl element (12), for causing an acceleration of the air flow coming from or flowing through the discharge pipe (4).

13. Flue gas discharge assembly (2) according to one or more of the preceding claims, **characterized in that**, the flue gas discharge pipe (4) runs over at least a part of the length thereof inside an air supply pipe (6) or that an air supply pipe runs over at least a part of the length thereof inside the flue gas discharge pipe, and in which at the side facing away from the furnace said pipes (4,6) end at a distance from each other, related to the lengthwise direction of the pipes.

## Patentansprüche

1. Rauchgasabfuhranordnung (2), die zur Verbindung mit der Rauchgasabfuhröffnung eines Verbrennungsofens, beispielsweise eines Heizkessels oder Warmwasserbereiters, geeignet ist und folgendes umfaßt: ein Rauchgasabfuhrrohr (4 14), das mit Auffangmitteln (12) zum Auffangen von Kondensation versehen ist, wobei ein den Querschnitt des Rauchgasrohrs (4, 14) bedeckendes Abdeckelement (9) in einem axialen Abstand von der von dem Ofen weg weisenden Öffnung des Rohrs angeordnet ist, so daß Fluidströmung zwischen dem Abdeckelement (9) und der Auslaßöffnung des Abfuhrrohrs gestattet wird, **dadurch gekennzeichnet, daß** die Auffangmittel ein Auffangschalenelement (12) umfassen, wobei der Umfang der Schale an das Abdeckelement (9) angepaßt und koaxial damit ist, wobei das Auffangschalenelement außerhalb des Rauchgasabfuhrrohrs (4, 14) angeordnet und mit dem Rohr verbunden ist, so daß außerhalb der Abfuhranordnung über der Schale (12) gebildete Kondensation in der Schale (12) aufgefangen wird, daß die Auffangmittel (12) in Strömungsverbindung mit dem Inneren des Rauchgasabfuhrrohrs (4) stehen, so daß in dem Auffangschalenelement (12) aufgefangene Flüssigkeit in das Rauchgasabfuhrrohr fließen kann.

2. Rauchgasabfuhranordnung (2) nach Anspruch 1, **dadurch gekennzeichnet, daß** sich das Auffangschalenelement (12) um das Abfuhrrohr (4, 14) herum erstreckt und vorzugsweise damit koaxial ist.

3. Rauchgasabfuhranordnung (2) nach einem oder mehreren der vorhergehenden Ansprüche, **dadurch gekennzeichnet, daß** über dem Auffangschalenelement (12) ein ringförmiges Element (13) angeordnet ist, das einen Tropfrand definiert, der innerhalb des nach oben weisenden Rands des Auffangschalenelements (12) liegt.

4. Rauchgasabfuhranordnung nach Anspruch 3, **dadurch gekennzeichnet, daß** das ringförmige Element (13) Wände aufweist, die bezüglich der Längsrichtung des Rauchgasabfuhrrohrs (4, 14) geneigt sind.

5. Rauchgasabfuhranordnung nach Anspruch 3 oder 4, **dadurch gekennzeichnet, daß** das ringförmige Element (13) in das Auffangschalenelement (12) hineinragt.

6. Rauchgasabfuhranordnung nach Anspruch 3 und/oder 4, **dadurch gekennzeichnet, daß** zwischen dem Auffangschalenelement (12) und dem ringförmigen Element (13) ein axialer Abstand aufrechterhalten ist.

7. Rauchgasabfuhranordnung (2) nach einem oder mehreren der Ansprüche 3 bis 6, **dadurch gekennzeichnet, daß** das Abdeckelement (9) über dem ringförmigen Element (13) angeordnet ist.

8. Rauchgasabfuhranordnung nach einem der vorhergehenden Ansprüche, **dadurch gekennzeichnet, daß** das Abdeckelement (9) einen Wandteil (11) aufweist, der sich in Richtung der Öffnung des Rohrs (4) vom Umfang zur Mittellinie der Rohre (4, 13, 14) neigt.

9. Rauchgasabfuhranordnung nach einem oder mehreren der vorhergehenden Ansprüche, **dadurch gekennzeichnet, daß** das Auffangschalenelement (12) über einen ringförmigen Spalt mit dem Inneren des Rohrs in Strömungsverbindung steht, während die Wände des ringförmigen Spalts so ausgeführt sind, daß im Vergleich zu dem Luftwiderstand im Rohr (4) ein beträchtlicher Luftwiderstand gegen die Gasströmung durch den Spalt hervorgerufen wird.

10. Rauchgasabfuhranordnung nach einem oder mehreren der vorhergehenden Ansprüche, **dadurch gekennzeichnet, daß** das Auffangschalenelement (12) einen aus dem Abfuhrrohr (4) ragenden Rohrstutzen (14) umgibt und daß das Auffangbehälterelement (12) die Fortführung der Öffnung des Rohrs (4) definiert.

11. Rauchgasabfuhranordnung nach Anspruch 11 in Kombination mit mindestens Anspruch 4, **dadurch gekennzeichnet, daß** der Rohrstutzen (14) in das ringförmige Element (13) mündet.

12. Rauchgasabfuhranordnung (2) nach einem oder mehreren der vorhergehenden Ansprüche, **dadurch gekennzeichnet, daß** in dem Bereich innerhalb des Auffangschalenelements (12) Elemente zum Bewirken einer Beschleunigung des von dem Abfuhrrohr (4) kommenden oder dadurch strömenden Luftstroms angeordnet sind.

13. Rauchgasabfuhranordnung (2) nach einem oder mehreren der vorhergehenden Ansprüche, **dadurch gekennzeichnet, daß** das Rauchgasabfuhrrohr (4) über mindestens einen Teil seiner Länge innerhalb eines Luftzufuhrrohrs (6) verläuft oder daß ein Luftzufuhrrohr über mindestens einen Teil seiner Länge innerhalb des Rauchgasabfuhrrohrs verläuft, und wobei die Rohre (4, 6) auf der von dem Ofen weg weisenden Seite bezüglich der Längsrichtung der Rohre in einem Abstand voneinander enden.

## Revendications

1. Assemblage de décharge de gaz de fumée (2) approprié pour être relié à l'ouverture de décharge du tube-foyer d'un four à combustion, par exemple d'une chaudière de chauffage ou d'un chauffe-eau, l'assemblage comprenant un tuyau de décharge des gaz de fumée (4, 14) muni de collecteurs (12) pour collecter la condensation, dans lequel un élément de recouvrement (9) recouvrant la section transversale du tuyau des gaz de fumée (4, 14) est arrangé à une certaine distance axiale de l'ouverture dudit tuyau opposée au four de telle sorte que l'écoulement de fluide entre ledit élément de recouvrement (9) et l'ouverture de sortie du tuyau de décharge est permis, **caractérisé en ce que** les collecteurs comprennent un bol collecteur (12), la périphérie du bol étant adaptée à l'élément de recouvrement (9) et coaxiale à ce dernier, dans lequel le bol collecteur est arrangé à l'extérieur du tuyau de décharge des gaz de fumée (4, 14) et relié audit tuyau, de telle sorte que la condensation qui se forme à l'extérieur de l'assemblage de décharge au-dessus dudit bol (12) est récoltée dans ledit bol (12), les collecteurs (12) se trouvant en communication de fluide avec l'intérieur du tuyau de décharge (4) de telles sorte que le fluide récolté dans le bol collecteur (12) peut s'écouler dans le tuyau de décharge des gaz de fumée.

2. Assemblage de décharge de gaz de fumée (2) selon la revendication 1, **caractérisé en ce que** ledit bol collecteur (12) s'étend autour dudit tuyau de décharge (4, 14) et est de préférence coaxial avec ce dernier.

3. Assemblage de décharge de gaz de fumée (2) selon une ou plusieurs des revendications précédentes, **caractérisé en ce qu'**un élément annulaire (13) est disposé au-dessus du bol collecteur (12), ledit élément annulaire (13) définissant un bord d'égouttage qui est disposé à l'intérieur du bord du bol collecteur (12) orienté vers le haut.

4. Assemblage de décharge de gaz de fumée selon la revendication 3, **caractérisé en ce que** l'élément annulaire (13) possède des parois inclinées par rapport à la direction longitudinale du tuyau de décharge des gaz de fumée (4, 14).

5. Assemblage de décharge de gaz de fumée selon la revendication 3 ou 4, **caractérisé en ce que** l'élément annulaire (13) fait saillie dans le bol collecteur (12).

6. Assemblage de décharge de gaz de fumée selon l'une ou plusieurs des revendication 3-4, **caractérisé en ce qu'**on maintient un espace axial entre le bol collecteur (12) et l'élément annulaire (13).

7. Assemblage de décharge de gaz de fumée (2) selon l'une ou plusieurs des revendications 3-6, **caractérisé en ce que** l'élément de recouvrement (9) est arrangé au-dessus de l'élément annulaire (13).

8. Assemblage de décharge de gaz de fumée selon l'une quelconque des revendications précédentes, **caractérisé en ce que** l'élément de recouvrement (9) possède une partie de paroi (11) dont la pente s'étend depuis la périphérie en direction de la médiane des tuyaux (4, 13, 14) dans la direction d'ouverture dudit tuyau (4).

9. Assemblage de décharge de gaz de fumée selon l'une ou plusieurs des revendications précédentes, **caractérisé en ce que** le bol collecteur (12) se trouve en communication de fluide avec l'intérieur du tuyau au moyen d'un espace libre annulaire, tandis que les parois dudit espace libre annulaire sont conçues de telle sorte qu'une résistance considérable de l'air à l'écoulement de gaz s'établit à travers ledit espace libre par comparaison à la résistance de l'air régnant à l'intérieur du tuyau (4).

10. Assemblage de décharge de gaz de fumée selon une ou plusieurs des revendications précédentes, **caractérisé en ce que** le bol collecteur (12) entoure une tubulure (14) faisant saillie par rapport audit tuyau de décharge (4) et **en ce que** le récipient collecteur (12) définit le prolongement de l'ouverture dudit tuyau (4).

11. Assemblage de décharge de gaz de fumée selon la revendication 10 en combinaison avec au moins la revendication 3, **caractérisé en ce que** ladite tubulure de tuyau (14) s'ouvre à l'intérieur dudit élément annulaire (13).

12. Assemblage de décharge de gaz de fumée (2) selon une ou plusieurs des revendications précédentes, **caractérisé en ce que** des éléments sont disposés dans la zone à l'intérieur du bol collecteur (12) pour provoquer une accélération du courant d'air provenant du tuyau de décharge (4) ou s'écoulant à travers ce dernier.

13. Assemblage de décharge de gaz de fumée (2) selon une ou plusieurs des revendications précédentes, **caractérisé en ce que** le tuyau de décharge des gaz de fumée (4) s'étend, sur au moins une partie de sa longueur, à l'intérieur du tuyau de décharge des gaz de fumée, et dans lequel, du côté se détournant du four, lesdits tuyaux (4,6) se terminent à distance l'un de l'autre par rapport à la direction longitudinale des tuyaux.
